**Europäisches Patentamt**

**European Patent Office**

**Office européen des brevets**

(19)

(11) Veröffentlichungsnummer: **0 320 509 B1**

(12) # EUROPÄISCHE PATENTSCHRIFT

(45) Veröffentlichungstag der Patentschrift:
08.01.92 Patentblatt 92/02

(51) Int. Cl.⁵: **G11B 7/09**

(21) Anmeldenummer: **88904534.0**

(22) Anmeldetag: **26.05.88**

(86) Internationale Anmeldenummer:
**PCT/EP88/00470**

(87) Internationale Veröffentlichungsnummer:
**WO 88/09988 15.12.88 Gazette 88/27**

(54) **GERÄT ZUR WIEDERGABE VON DATEN.**

(30) Priorität: **11.06.87 DE 3719489**

(43) Veröffentlichungstag der Anmeldung:
**21.06.89 Patentblatt 89/25**

(45) Bekanntmachung des Hinweises auf die
Patenterteilung:
**08.01.92 Patentblatt 92/02**

(84) Benannte Vertragsstaaten:
**AT BE CH DE FR GB IT LI LU NL SE**

(56) Entgegenhaltungen:
**EP-A- 0 160 095**

(56) Entgegenhaltungen:
**Patent Abstracts of Japan, vol. 9,
No:37,(p-335) (1760) 16 February 1985, & JP, A,
59178629, 9 October 1984, see abstract
Patent Abstracts of Japan, vol. 8, No:141,
(p-283) (1578) 30 June 1984 & JP, A, 5938936 3
March 1984, see abstract**

(73) Patentinhaber: **Deutsche Thomson-Brandt
GmbH
Hermann-Schwer-Strasse 3 Postfach 1307
W-7730 Villingen-Schwenningen (DE)**

(72) Erfinder: **GLEIM, Günter
Oberer Sonnenbühl 22
W-7730 Villingen-Schwenningen 22 (DE)**

## Beschreibung

Die Erfindung betrifft ein Gerät zur Wiedergabe von Daten, die mittels einer optischen Abtastvorrichtung aus den Datenspuren eines Aufzeichnungsträgers lesbar sind, indem ein Lichtstrahl auf den Aufzeichnungsträger mittels eines Fokusregelkreises fokussierbar und mittels eines Spurregelkreises entlang den Datenspuren führbar ist, indem der Lichtstrahl vom Aufzeichnungsträger auf einen Photodetektor reflektiert wird, mittels dem ein elektrisches Datensignal erzeugt wird, indem die obere und die untere Hüllkurve des Datensignals ausgewertet werden, indem die untere Hüllkurve in einem ersten Vergleicher mit einem unteren Schwellwert verglichen wird, indem der erste Vergleicher bei überschreiten des unteren Schwellwerts ein Signal an seinem Ausgang abgibt, was anzeigt, daß eine Störung vorliegt, die durch Schmutz, Fingerabdrücke, Kratzer etc. auf dem Aufzeichnungsträger oder durch Erschütterungen verursacht sind, und indem die obere Hüllkurve in einem zweiten Vergleicher mit einem oberen Schwellwert verglichen wird, indem der zweite Vergleicher bei Unterschreiten des oberen Schwellwertes ein Signal an seinem Ausgang abgibt, was anzeigt, daß der Lichtstrahl über Datenspuren springt.

Derartige Geräte, z.B. CD-Spieler, magneto-optische Geräte zur Wiedergabe und Aufzeichnung, Aufzeichnungs- und Wiedergabegeräte für Draw-Discs oder Videoplattenspieler, sind mit einer optischen Abtastvorrichtung, bestehend aus einer Laserdiode, mehreren Linsen, einem Primenstrahlteiler und einem Photodetektor ausgestattet. Aufbau und Funktion einer optischen Abtastvorrichtung, eines sogenannten optical pick-ups, sind in Electronic components & applications, Vol. 6, No. 4, 1984 auf Seite 209-215 beschrieben.

Der von der Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird der Istwert für den Fokusregelkreis als focusing error bezeichnet, während für den Istwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von den Laserdioden ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Primenstrahlteiler und dem Photodetektor radial verschiebbar ist. Mit dem Feinantrieb ist der Lichtstrahl in radialer Richtung z.B. um einen vorgebbaren kleinen Winkel kippbar, so daß der Lichtstrahl allein durch diese Kippbewegung ein kleines Stück entlang einem Radius der CD-Platte fahren kann.

Um eine einwandfreie Wiedergabe der Daten, seien es nun z.B. Bild und Ton bei einem Videoplattenspieler oder bloß der Ton bei einem CD-Spieler, zu erzielen, ist neben einer genauen Fokussierung des Lichtstrahls auf die Video- bzw. CD-Platte eine präzise Führung entlang den Datenspuren der Platte erforderlich.

Beim Photodetektor, der in der Figur auf Seite 213 der genannten Literaturstelle gezeigt ist, sind vier quadratförmige Photodioden A, B, C und D so zusammengefügt, daß sie wiederum ein Quadrat bilden. Der Lichtstrahl, der auf die vier Photodioden A, B, C und D fokussiert wird, erzeugt im Photodetektor das Datensignal $HF = AS + BS + CS + DS$. Mit AS, BS, CS und DS sind jeweils die Photospannungen der Photodioden A, B, C und D bezeichnet.

Das Datensignal HF wird durch Schmutz, wie z.B. Staub oder Fingerabdrücke sowie durch Kratzer auf der CD-Platte gestört, weil sich dadurch das Reflexionsverhalten der Plattenoberfläche, der sogenannten Spiegelfläche, verschlechtert. Aber auch Erschütterungen des CD-Spielers führen zu Störungen des Datensignals HF, weil der Lichtstrahl sowohl die abzutastende Datenspur verlieren als auch aus dem Fokus geraten kann.

Bei Störungen des Datensignals HF, die durch Erschütterungen verursacht sind, ist es günstig, die Verstärkung im Fokus- und Spurregelkreis zu erhöhen; dagegen wirken sich Störungen, die von Verunreinigungen auf der CD-Platte herrühren, bei verringerter Verstärkung im Fokus- und Spurregelkreis weniger stark aus.

Wenn der Lichtstrahl - beim sogenannten Spurspringen - über mehrere Spuren hinweg z.B. zum Anfang eines vom Hörer gewünschten Musikstücks springen soll, wird zuerst die Anzahl der zwischen der gegenwärtigen Position des Lichtstrahls und dem Zielpunkt, dem Anfang des gewünschten Musikstücks, liegenden Spuren berechnet. Anschließend fährt der Lichtstrahl vom Spurregelkreis gelenkt zum Anfang des gewünschten Musikstücks. Um jedoch genau beim Zielpunkt zu landen, ist es erforderlich, die übersprungenen Datenspuren genau zu zählen.

Beim Spurspringen nimmt die obere Hüllkurve des Datensignals HF einen sinusförmigen Verlauf an. Ihre

2

absolute Amplitude wird maximal, wenn der Lichtstrahl auf eine Datenspur strahlt, dagegen minimal, wenn er auf den Raum zwischen zwei Datenspuren fällt. Deshalb entspricht beim Spurspringen die Anzahl der detektierten Maxima der Anzahl der übersprungenen Spuren.

Wie bereits erwähnt, kann das Datensignal durch Schmutz auf der CD-Platte und durch Erschütterungen gestört werden, was während des Spurspringens zu Fehlern beim Abzählen der Maxima führen kann.

Aus der EP-A 0 160 095 ist ein Spurregelkreis für ein optisches Wiedergabegerät gemäß dem Oberbegriff von Anspruch 1 bekannt. Das von einem Photodetektor gelieferte Datensignal wird über eine kapazitive Kopplung an eine Schaltungsanordnung weitergeleitet, welche die obere und die untere Hüllkurve des Datensignals auswertet, um ein Kriterium für die Verstärkung des Spurregelkreises zu gewinnen. Hierzu wird die obere Hüllkurve des Datensignals in einem ersten Vergleicher mit einem ersten Schwellwert verglichen, während die untere Hüllkurve in einem zweiten Vergleicher mit einem zweiten Schwellwert verglichen wird. Bei Einbrüchen der unteren Hüllkurve, die durch mechanische Erschütterungen verursacht werden, wird die Verstärkung im Spurregelkreis erhöht. Bei Einbrüchen der oberen Hüllkurve, als deren Ursache sich häufig Schmutz, Kratzer oder ein Riß auf der Platte herausstellen, wird die Verstärkung im Spurregelkreis verringert.

Dieser Spurregelkreis kann zwar die Ursache einer Störung im Datensignal meist einigermaßen genau erkennen, jedoch ist seine Leistungsfähigkeit begrenzt. Durch geeignete Maßnahmen läßt sich indessen die Genauigkeit beim Erkennen einer Störung im Datensignal erhöhen.

Es ist daher Aufgabe der Erfindung, die Ursache einer Störung des Datensignals möglichst genau zu erkennen und daraus ein Kriterium für die Steuerung des Fokus- und/oder des Spurregelkreises abzuleiten.

Die Erfindung löst diese Aufgabe dadurch, daß das Datensignal am Ausgang des Photodetektors über eine galvanische Kopplung einer Schaltungsanordnung zur Auswertung seiner Hüllkurve zugeführt wird.

Bei bisher bekannten CD-Spielern wird das Datensignal nicht wie bei der Erfindung gleichstrommäßig, sondern mittels einer Kapazität wechselstrommäßig gekoppelt. Wegen der wechselstrommäßigen Kopplung kann anhand des Signalverlaufs jedoch nur schwer erkannt werden, ob Störungen des Datensignals vorliegen oder ob der Lichtstrahl beim Spurspringen über mehrere Spuren springt.

Anhand eines Ausführungsbeispieles wird die Erfindung erläutert.

Es zeigen

Figur 1 den Verlauf eines ungestörten Datensignals HF

Figur 2 den Verlauf eines ungestörten Datensignals HF beim Spurspringen

Figur 3 den Verlauf eines durch Schmutz auf der CD-Platte oder duch Erschütterungen gestörten Datensignals HF

Figur 4 den Verlauf eines durch Verunreinigung auf der CD-Platte oder durch Erschütterungen gestörten Datensignals HF beim Spurspringen

Figur 5 ein erstes Ausführungsbeispiel der Erfindung

Figur 6 ein zweites Ausführungsbeispiel der Erfindung.

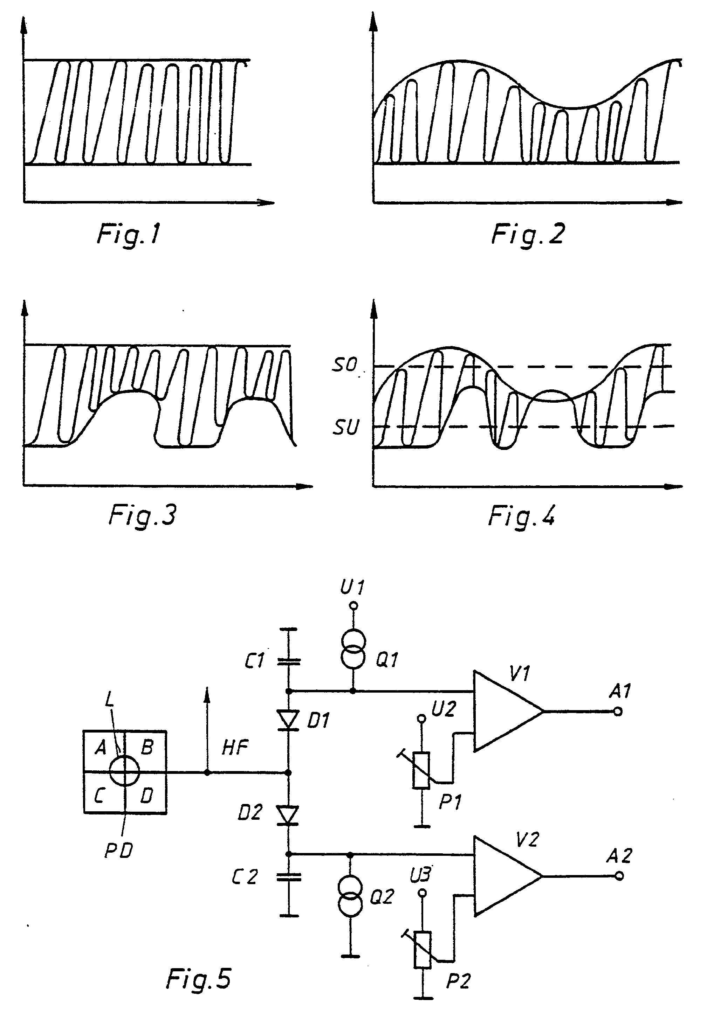

In der Figur 1 ist der Verlauf des Datensignals HF unter idealen Bedingungen gezeigt. Die obere und die untere Hüllkurve sind in diesem Fall zwei Geraden.

In der Figur 2 ist der ideale Verlauf beim Spurspringen dargestellt. Die untere Hüllkurve ist wiederum eine Gerade, dagegen zeigt die obere Hüllkurve sinusförmigen Verlauf.

In der Figur 3 stellt zwar die obere Hüllkurve eine Gerade dar, jedoch weist die untere Hüllkurve unregelmäßige Bäuche auf, die von Verunreinigungen oder Kratzern auf der CD-Platte herrühren oder durch Erschütterungen verursacht sind.

Schließlich zeigt die Figur 4, wie das Datensignal aussieht, wenn der CD-Spieler beim Spurspringen Erschütterungen ausgesetzt ist oder die CD-Platte durch Kratzer, Staub, Fingerabdrücke oder anderen Schmutz beschädigt ist. Der sinusförmige Verlauf der oberen Hüllkurve kann durch die untere Hüllkurve, die ähnlich wie in Figur 3 verläuft, unterbrochen sein.

Anhand des in Figur 5 gezeigten Ausführungsbeispiels wird die Erfindung zuerst beschrieben und anschließend mit Hilfe der Figuren 1 - 4 erläutert.

In der Figur 5 wird der von der CD-Platte reflektierte Lichtstrahl L auf den Photodetektor PD fokussiert, der aus vier quadratförmigen Photodioden A, B, C und D aufgebaut ist. Das vom Photodetektor PD erzeugte Datensignal HF, die Summe der Photospannungen AS, BS, CS und DS der Photodioden A, B, C und D, wird zur Dekodierung an eine der Einfachheit halber nicht eingezeichnete Schaltung weitergeleitet, wie es bei CD-Spielern allgemein üblich ist. Zusätzlich gelangt das Datensignal HF an die Kathode einer Diode D1, die mit der Anode einer Diode D2 verbunden ist. Die Anode der Diode D1 ist mit dem einen Anschluß einer Kapazität C1, deren anderer Anschluß auf Bezugspotential liegt, mit dem einen Pol einer Stromquelle Q1, an deren anderem Pol eine Spannung U1 liegt, und mit dem einen Eingang eines Vergleichers V1 verbunden, dessen anderer Eingang mit dem Abgriff eines Potentiometers P1 verbunden ist. Am einen Anschluß des Potentiometers P1 liegt eine Spannung U2, während sein anderer Anschluß auf Bezugspotential liegt. Die Kathode der Diode D2 ist mit dem einen Anschluß einer Kapazität C2, deren anderer Anschluß auf Bezugspotential liegt, mit dem einen Pol einer Stromquelle Q2, deren anderer Pol ebenfalls auf Bezugspotential liegt, und mit dem einen Eingang eines Vergleichers V2 verbunden, dessen anderer Eingang mit dem Abgriff eines Potentiometers P2 verbunden ist. Am einen Anschluß des Potentiometers P2 liegt eine Spannung U3, sein anderer Anschluß liegt dagegen auf Bezugspotential.

Mit demjenigen Teil der in Figur 5 gezeigten Schaltungsanordnung, der aus den Bauteilen D1, C1, Q1, V1 und P1 besteht, wird die untere Hüllkurve mit dem in Figur 4 gestrichelt eingezeichneten unteren Schwellwert SU verglichen. Mit dem anderen Teil der Schaltungsanordnung aus Figur 5, den die Bauteile D2, C2, Q2, V2 und P2 bilden, wird die obere Hüllkurve mit dem in Figur 4 ebenfalls gestrichelt gezeichneten oberen Schwellwert SO verglichen. Der Vergleicher V2 gibt ein Signal an seinem Ausgang A2 ab, wenn die obere Hüllkurve des Datesignals HF unter den oberen Schwellwert SO sinkt. Dieses Signal am Ausgang A2 zeigt an, daß der Lichtstrahl über Spuren springt. Dagegen gibt der Vergleicher V1 an seinem Ausgang A1 ein Signal ab, wenn die untere Hüllkurve des Datensignals den unteren Schwellwert SU überschreitet. Das Signal am Ausgang A1 zeigt an, daß eine Störung vorliegt, die durch Schmutz, Fingerabdrücke, Kratzer, etc. auf der CD-Platte oder durch Erschütterungen des CD-Spielers verursacht sind. Durch die Einstellung der beiden Potentiometer P1 und P2 werden die beiden Schwellwerte, der untere SU und der obere SO, festgelegt.

Besonders vorteilhaft ist es, das Datensignal auf die obere oder untere Hüllkurve zu klemmen. Die untere Hüllkurve, die einem reflektierenden Fleck entspricht, hängt stark vom Reflexionsvermögen der CD-Platte ab. Bei gut reflektierender sauberer CD-Platte ist in den Figuren 1 bis 4 der Abstand der unteren Hüllkurfe zur Abszisse am geringsten. Je schlechter das Reflexionsvermögen aber z.B. durch Staub, Fingerabdrücke usw. wird, desto mehr wird die untere Hüllkurve nach oben zur oberen Hüllkurve hin verschoben. Aus diesem Grund ist es sinnvoll, auf die obere Hüllkurve zu klemmen, weil sie einem dunklen nicht reflektierenden Fleck auf der CD-Platte entspricht.

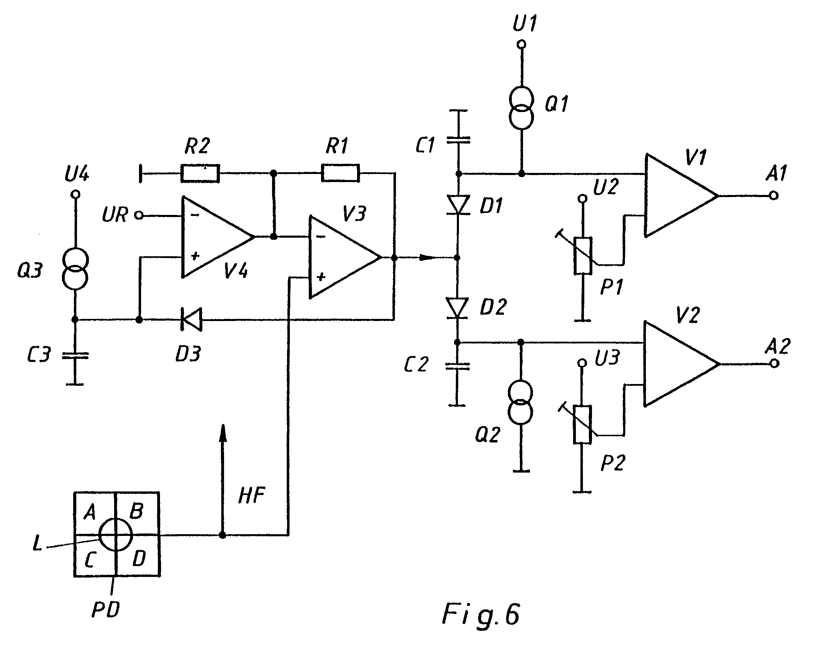

In der Figur 6 ist ein Ausführungsbeispiel der Erfindung gezeigt, bei dem das Datensignal auf den Maximalwert der oberen Hüllkurve, d.h. auf den dunkelsten Wert - keinerlei Reflexion auf der CD-Platte - geklemmt ist. Es unterscheidet sich vom Ausführungsbeispiel aus Figur 5 dadruch, daß zwischen dem Photodetektor PD und den Dioden D1 und D2 eine Klemmschaltung folgenden Aufbaus vorgesehen ist.

Das Datensignal HF liegt am nichtinvertierenden Eingang eines Verstärkers V3, dessen Ausgang mit dem gemeinsamen Verbindungspunkt der Kathode der Diode D1 und der Anode der Diode D2 verbunden ist. Ausserdem liegt der Ausgang des Verstärkers V3 über eine Reihenschaltung aus zwei Widerständen R1 und R2 auf Bezugspotential. Der gemeinsame Verbindungspunkt der beiden Widerstände R1 und R2 ist mit dem invertierenden Eingang des Verstärkers V3 und mit dem Ausgang eines Verstärkers V4 verbunden, an dessen invertierendem Eingang eine Referenzspannung UR liegt. Der nichtinvertierende Eingang des Verstärkers V4 ist mit dem einen Pol einer Stromquelle Q3, an deren anderem Pol eine Spannung U4 liegt, mit dem einen Anschluß einer Kapazität C4, deren anderer Anschluß auf Bezugspotential liegt und mit der Kathode einer Diode D3 verbunden, deren Anode mit dem Ausgang des Verstärkers V3 verbunden ist. Wenn auf die untere Hüllkurve geklemmt werden soll, so ist lediglich die Diode D3 umzupolen.

Dadurch, daß der CD-Spieler am Datensignal HF sofort erkennt, ob der Lichtstrahl über Spuren springt, ob Störungen verursacht durch Erschütterungen oder durch Schmutz auf der CD-Platte oder ob beide Erscheinungen vorliegen, sind der Fokus- und der Spurregelkreis in der Lage, schneller und genauer zu regeln.


## Patentansprüche

1. Gerät zur Wiedergabe von Daten, die mittels einer optischen Abtastvorrichtung aus den Datenspuren eines Aufzeichnungsträgers lesbar sind, indem ein Lichtstrahl (L) auf den Aufzeichnungsträger mittels eines Fokusregelkreises fokussierbar und mittels eines Spurregelkreises entlang der Datenspuren führbar ist, indem der Lichtstrahl (L) vom Aufzeichnungsträger auf einen Photodetektor (PD) reflektiert wird, mittels dem ein elektrisches Datensignal (HF) erzeugt wird, indem die obere und die untere Hüllkurve des Datensignals (HF) ausgewertet werden, indem die untere Hüllkurve in einem ersten Vergleicher (V1) mit einem unteren Schwellwert (SU) verglichen wird, indem der erste Vergleicher (V1) bei überschreiten des unteren Schwellwertes (SU) ein Signal an seinem Ausgang (A1) abgibt, was anzeigt, daß eine Störung vorliegt, die durch Schmutz, Fingerabdrücke, Kratzer etc. auf dem Aufzeichnungsträger oder durch Erschütterungen verursacht sind und indem die obere Hüllkurve in einem zweiten Vergleicher (V2) mit einem oberen Schwellwert (SO) verglichen wird, indem der zweite Vergleicher bei Unterschreiten des oberen Schwellwertes (SO) ein Signal an seinem Ausgang (A2) abgibt, was anzeigt, daß der Lichtstrahl (L) über Datenspuren springt, **dadurch gekennzeichnet**, daß das Datensignal am Ausgang des Photodetektors über eine galvanische Kopplung einer Schaltungsanordnung zur Auswertung seiner Hüllkurven zugeführt wird.

2. Gerät nach Anspruch 1, **dadurch gekennzeichnet**, daß das Datensignal (HF) dem gemeinsamen Verbindungspunkt der Kathode einer ersten Diode (D1) und der Anode einer zweiten Diode (D2) zugeführt wird, daß die Anode der ersten Diode (D1) mit dem einen Anschluß einer ersten Kapazität (C1), deren anderer Anschluß auf Bezugspotential liegt, mit dem einen Pol einer ersten Stromquelle (Q1), an deren anderem Pol eine erste Spannung (U1) liegt, und mit dem einen Eingang des ersten Vergleichers (V1) verbunden ist, dessen anderer Eingang mit dem Abgriff eines ersten Potentiometers (P1) verbunden ist, daß am einen Anschluß des ersten Potentiometers (P1) eine zweite Spannung (U2) liegt, daß sein anderer Anschluß auf Bezugspotential liegt, daß die Kathode der zweiten Diode (D2) mit dem einen Anschluß einer zweiten Kapazität (C2), deren anderer Anschluß auf Bezugspotential liegt, mit dem einen Pol einer zweiten Stromquelle (Q2), deren anderer Pol auf Bezugspotential liegt, und mit dem einen Eingang des zweiten Vergleichers (V2) verbunden ist, dessen anderer Eingang mit dem Abgriff eines zweiten Potentiometers (P2) verbunden ist, daß am einen Anschluß des zweiten Potentiometers (P2) eine dritte Spannung (U3) liegt und daß der andere Anschluß des zweiten Potentiometers (P2) auf Bezugspotential liegt.

## Claims

1. Apparatus for reproducing data which can be read by means of an optical scanning device from the data tracks of a record carrier, by a light beam (L) being able to be focused on the record carrier by means of a focus control system and guided by means of a track control system along the data tracks, by the light beam (L) being reflected by the record carrier onto a photodetector (PD) by means of which an electric data signal (HF) is generated, by the upper and the lower envelope curve of the data signal (HF) being evaluated, by the lower envelope curve being compared in a first comparator (V1) with a lower threshold value (SU), by the first comparator (V1), if the lower threshold value (SU) is exceeded, emitting a signal at its output (A1), which indicates that a fault exists which is caused by dirt, finger marks, scratches etc. on the record carrier or by vibrations, and by the upper envelope curve being compared in a second comparator (V2) with an upper threshold value (SO), by the second comparator, if the upper threshold value (SO) is fallen below, emitting a signal at its output (A2), which indicates that the light beam (L) jumps over data tracks, <u>characterised in that</u> the data signal is at the output of the photodetector fed via a DC coupling to a circuit arrangement for the evaluation of its envelope curves.

2. Apparatus according to claim 1, <u>characterised in that</u> the data signal (HF) is fed to the common connection point of the cathode of a first diode (D1) and the anode of a second diode (D2), that the anode of the first diode (D1) is connected to the one terminal of a first capacitor (C1) whose other terminal lies at reference potential, to the one pole of a first current source (Q1) to whose other pole a first voltage (U1) is applied, and to the one input of the first comparator (V1) whose other input is connected to the pick-off of a first potentiometer (P1), that to the one terminal of the first potentiometer (P1) a second voltage (U2) is applied, that its other terminal lies at reference potential, that the cathode of the second diode (D2) is connected to the one terminal of a second capacitor (C2) whose other terminal lies at reference potential, to the one pole of a second current source (Q2) whose other pole lies at reference potential, and to the one input of the second comparator (V2) whose other input is connected to the pick-off of a second potentiometer (P2), that to the one terminal of the second potentiometer (P2) a third voltage (U3) is applied and that the other terminal of the second potentiometer (P2) lies at reference potential.

## Revendications

1. Appareil pour la reproduction de données qui sont lisibles au moyen d'un dispositif d'exploration optique à partir des pistes de données d'un support d'enregistrement, un faisceau lumineux (L) pouvant être focalisé sur le support d'enregistrement au moyen d'un circuit de réglage de foyer et pouvant être guidé le long des pistes de données au moyen d'un circuit de réglage de pistes, le faisceau lumineux (L) étant réfléchi par le support d'enregistrement sur un photodétecteur (PD) au moyen duquel un signal électrique de données (HF) est produit. l'enveloppante supérieure et l'enveloppante inférieure du signal de données (HF) étant exploitées. l'enveloppante inférieure étant comparée dans un premier comparateur (V1) à un seuil inférieur (SU), le premier comparateur (V1) donnant un signal à sa sortie (A1) lorsque le seuil inférieur (SU) est dépassé, ceci indiquant qu'il y a une perturbation qui est causée par de la saleté, des empreintes digitales, des rayures etc. sur le support d'enregistrement ou par des secousses. l'enveloppante supérieure étant comparée dans un second comparateur (V2) à un seuil supérieur (SO), le second comparateur donnant un signal à sa sortie (A2) lorsque le seuil supérieur (SO) n'est pas atteint, ceci indiquant que le faisceau lumineux (L) saute par-dessus des pistes de données, **caractèrisé en ce** que le signal de données à la sortie du photo-détecteur est amené par un couplage capacitif à un circuit pour l'exploitation de ses enveloppantes.

2. Appareil selon la revendication 1, **caractérisé en ce** que le signal de données (HF) est amené au point de connexion commun de la cathode d'une première diode (D1) et de l'anode d'une seconde diode (D2), que l'anode de la première diode (D1) est reliée à l'un des raccords d'une première capacité (C1) dont l'autre raccord est mis sur le potentiel de référence, à l'un des pôles d'une première source de courant (Q1), à l'autre pôle de laquelle se trouve une première tension (U1), et à l'une des entrées du premier comparateur (V1) dont l'autre entrée est reliée à la prise d'un premier potentiomètre (P1), qu'une seconde tension (U2) se trouve sur l'un des raccords du premier potentiomètre (P1), que son autre raccord est sur le potentiel de référence, que la cathode de la seconde diode (D2) est reliée à l'un des raccords d'une seconde capacité (C2) dont l'autre raccord est mis sur le potentiel de référence, à l'un des pôles d'une seconde source de courant (Q2) dont l'autre pôle se trouve sur le potentiel de référence et à l'une des entrées au second comparateur (V2) dont l'autre entrée est reliée à la prise d'un second potentiomètre (P2), qu'une troisième tension (U3) se trouve sur l'un des raccords du second potentiomètre (P2) tandis que l'autre raccord du second potentiomètre (P2) est sur le potentiel de référence.

Fig.1

Fig.2

Fig.3

Fig.4

Fig.5

Fig. 6